# EUROPÄISCHE PATENTSCHRIFT

(11) **EP 3 558 754 B1**
(45) Veröffentlichungstag und Bekanntmachung des Hinweises auf die Patenterteilung: **04.08.2021**
(21) Anmeldenummer: 17844636.5
(22) Anmeldetag: 20.12.2017
(51) Int. Cl.: B60R 16/03, G06F 1/30, G06F 1/32, G06F 9/4401

(54) **ELEKTRISCHES ENERGIEMANAGEMENT EINES BORDSYSTEMS EINES KRAFTFAHRZEUGES**
ELECTRICAL ENERGY MANAGEMENT OF A VEHICLE SYSTEM OF A MOTOR VEHICLE
GESTION D'ÉNERGIE ÉLECTRIQUE D'UN SYSTÈME EMBARQUÉ D'UN VÉHICULE AUTOMOBILE

(30) Priorität: 23.12.2016 DE 102016015512
(43) Veröffentlichungstag der Anmeldung: 30.10.2019
(73) Patentinhaber: Bayerische Motoren Werke Aktiengesellschaft, 80788 München (DE); Mentor Graphics Corporation, Wilsonville, OR 97070-7777 (US)
(72) Erfinder: STRIEBEL, Reiner, 78479 Reichenau (DE); FRANZE, Daniel, 41462 Neuss (DE); SPÖRLEIN, Georg, 72296 Schopfloch (DE); SCHMID, Carsten, 78073 Bad Dürrheim (DE)
(74) Vertreter: Kütterer, Sandra Kerstin
(86) Internationale Anmeldenummer: PCT/DE2017/000431
(87) Internationale Veröffentlichungsnummer: WO 2018/113813

(56) Entgegenhaltungen:
- EP-A2- 0 376 510
- DE-A1-102009 041 006
- DE-A1-102014 019 435
- DE-A1-102014 215 410
- DE-A1-102014 224 485
- DE-U1- 8 817 191
- US-A1- 2006 242 458
- US-A1- 2008 155 209
- US-A1- 2013 154 354
- US-A1- 2015 082 011
- US-B1- 6 243 630

## Beschreibung

Die vorliegende Erfindung betrifft ein elektrisches Energiemanagement eines Bordsystems eines Kraftfahrzeuges.

Um den Energieverbrauch des Fahrzeugs während des sleep modes (Parkzeit) zu minimieren, werden Steuergeräte in dieser Phase von der Stromversorgung getrennt. Als Folge davon muss jedes Steuergerät beim wake-up einen Kaltstart durchführen, bei dem die gesamte Hardware neu initialisiert wird und die Software aus dem NAND-Speicher geladen und initialisiert wird. Dabei kann es bei komplexen Steuergeräten mit hohem Software-Anteil, wie bei der HeadUnit, bis zu ca. 20 - 40 Sekunden dauern bis alle Funktionen für den Kunden verfügbar sind. Dies ist bisher in der Automobilelektronik gängig.

Daher wäre es wünschenswert eine Möglichkeit bereitzustellen, die den Start dieser Fahrzeugfunktionen zu Beginn der Fahrzeugnutzung nach einem Abstellen (Parken) des Fahrzeuges beschleunigt.

Die US 2013 154 354 A1 offenbart, dass in einer fahrzeuginternen elektronischen Steuereinheit (ECU) eine Steuerung zum Steuern einer Reservestromquelle vorgesehen ist, um eine kontinuierliche Stromversorgung eines Speichers in einem Bereitschaftszustand von ACC-OFF unter Verwendung einer Batterie eines Fahrzeugs aufrechtzuerhalten. Die Steuerung reduziert den Dunkelstrom im Bereitschaftszustand durch Verringern einer Ausgangsspannung der Reservestromquelle der ECU in Abhängigkeit von einem Zustand der Batterie des Fahrzeugs. Die Steuerung kann nicht nur für die einzelne ECU, sondern auch für andere ECUs im Fahrzeug vorgesehen sein, wodurch der Dunkelstrom im gesamten Fahrzeug verringert wird.

Es ist Ziel der Erfindung eine Möglichkeit vorzuschlagen, welche zumindest einen Teil der im Stand der Technik bekannten Nachteile vermeidet oder zumindest vermindert.

Die Aufgabe wird erfindungsgemäß gelöst, mittels einer Vorrichtung, sowie mittels eines Verfahrens und mittels eines Kraftfahrzeuges gemäß nebengeordneten Ansprüchen.

Der Gegenstand des Hauptanspruches betrifft dabei eine Vorrichtung für ein elektrisches Energiemanagement eines Bordsystems eines Kraftfahrzeuges. Die Vorrichtung weist auf: Ein Netzteil zur Energieversorgung des Bordsystems des Kraftfahrzeuges, wobei das Netzteil einen Normal-Betrieb und einen Stand-By-Betrieb aufweist. Eine Verteilervorrichtung, ausgangsseitig aufweisend elektrische Spannungsebenen für die elektrische Energieversorgung von Bordsystemkomponenten des Bordsystems des Kraftfahrzeuges, wobei die Verteilervorrichtung elektrisch mit dem Netzteil verbunden ist. Eine Zustandsüberwachungsvorrichtung, zur Überwachung der elektrischen Energieversorgung des Netzteiles und zur Ansteuerung der Verteilervorrichtung. Eine Computervorrichtung, wobei die Computervorrichtung eingangsseitig elektrisch mit der Ausgangsseite der Verteilervorrichtung, über mindestens eine elektrische Spannungsebene, verbunden ist. Dabei weist die Computervorrichtung eine Betriebssystemvorrichtung und einen flüchtigen Computerdatenspeicher auf. Dabei ist der flüchtige Computerdatenspeicher dazu eingerichtet, auch in dem Stand-By-Betrieb der Vorrichtung für das Energiemanagement bestromt gehalten zu werden, derart, dass er seine auf ihm gespeicherten Bordsystemzustandsdaten nicht verliert. Und dabei erfolgt die Ansteuerung der Verteilervorrichtung von der Zustandsüberwachungsvorrichtung in dem Normal-Betrieb derart, dass Spannungsebenen für die Computervorrichtung und für Bordkomponenten des Bordsystems des Kraftfahrzeuges bereitgestellt werden. Und die Ansteuerung der Verteilervorrichtung von der Zustandsüberwachungsvorrichtung in dem Stand-By-Betrieb erfolgt derart, dass lediglich eine Spannungsebene für den flüchtigen Computerdatenspeicher der Computervorrichtung bereitgestellt wird.

Ein Bordsystem im Sinne der Erfindung meint dabei ein System in einem Kraftfahrzeug, welches Vorrichtungen und Systeme aufweist, die in dem Kraftfahrzeug elektrisch betrieben werden. Sie dienen in der Regel dem Fahrkomfort und/oder dem Infotainment des Fahrzeugnutzers und auch weiterer Insassen. Teile des Bordsystems sind gewöhnlich Displayanzeigen für den Fahrzeugnutzer, HeadUnit, Soundsystem, Navigationssystem, Head-Up-Display, elektrische Sitzeinstellvorrichtungen, Klimaanlage beziehungsweise Klimaautomatik, Steuergeräte und dergleichen. Dabei sind jedoch nur diejenigen Vorrichtungen, Systeme und Funktionen, also Komponenten gemeint, welche keine speziellen Funktionen im Stand-By-Betrieb aufweisen. Eine solche Ausnahme ist beispielsweise eine Diebstahlwarnanlage. Solche speziellen Bordsystemkomponenten werden gewöhnlich über eine Sleep-Mode Power-Leitung mit elektrischer Energie versorgt, im Gegensatz zu den hier gemeinten Bordsystemkomponenten.

Die erfindungsgemäße Vorrichtung kann dabei Teil des Bordsystems sein. Sie kann jedoch auch als eigenständige Vorrichtung ausgestaltet sein, welche dem Bordsystem Dienste anbietet, wie sie in einer HeadUnit eines Kraftfahrzeuges derzeit üblich sind. Die Vorrichtung kann jedoch auch noch Dienste anbieten, die über die Dienste einer HeadUnit hinausreichen.

Ein Normal-Betrieb im Sinne der Erfindung meint einen Betrieb des Kraftfahrzeuges, in welchem das Kraftfahrzeug aktiv genutzt wird, also einen aktiven Betrieb, indem das Kraftfahrzeug sich in einem aktivierten Zustand befindet. Im Normal-Betrieb befindet sich das Bordsystem in der Regel in einem aktiven Zustand.

Ein Stand-By-Betrieb im Sinne der Erfindung meint dabei einen Betrieb, in dem das Kraftfahrzeug abgestellt ist, also einen passiven Fahrzeugzustand. Im Stand-By-Betrieb befindet sich das Bordsystem in der Regel in einem passiven Zustand, insbesondere ist das Bordsystem in diesem Zustand deaktiviert, bis auf im Stand-By-Betrieb notwendige Bordsystemkomponenten, wie beispielsweise eine Diebstahlwarnanlage.

Eine Verteilervorrichtung des Kraftfahrzeuges im Sinne der Erfindung kann dabei eine Vorrichtung meinen, welche eine Energieverteilung für die Vorrichtung und/oder zumindest von Teilen des Bordsystems des Kraftfahrzeuges vornimmt. In der Regel stellt sie mehrere Spannungsebenen für Bordsystemkomponenten, also Vorrichtungen/Systeme des Bordsystems, zur Verfügung.

Eine Zustandsüberwachungsvorrichtung im Sinne der Erfindung meint dabei eine Vorrichtung, welche dafür zuständig ist, zu erkennen, in welchem Zustand, also Normal-Betrieb oder Stand-By-Betrieb, sich das Kraftfahrzeug befindet beziehungsweise einen Zustandswechsel festzustellen.

Eine Computervorrichtung im Sinne der Erfindung meint dabei eine Vorrichtung welche dazu eingerichtet ist, Berechnungen vorzunehmen, welche Bordsystemkomponenten benötigen, um ihre Dienste ordnungsgemäß zur Verfügung stellen zu können. Insbesondere kann die Computervorrichtung Berechnungen vornehmen, um dem Fahrzeugnutzer visuell entsprechende Informationen der Bordsystemkomponenten bereitzustellen.

Ein flüchtiger Computerdatenspeicher im Sinne der Erfindung meint dabei einen Speicher, welcher dazu eingerichtet ist, in einem entsprechend bestromten Zustand, elektronisch Informationen gespeichert vorzuhalten und in einem nicht-bestromten oder entsprechend ungeeignet bestromten Zustand, diese Informationen zu verlieren.

Die Computervorrichtung weist in der Regel dabei auch eine CPU auf.

Durch die erfindungsgemäße Lehre wird der Vorteil erreicht, dass Informationen zumindest von Teilen des Bordsystems bei einem Abstellen des Kraftfahrzeuges derart gesichert vorgehalten werden können, dass bei einem erneuten Aktivieren des Kraftfahrzeuges, diese Teile des Bordsystems besonders schnell wieder in dem Zustand verfügbar sind, in dem sie sich vor dem Abstellen des Kraftfahrzeuges befanden.

Davon können insbesondere Funktionen von Bordkomponenten des Bordsystems profitieren, wie beispielsweise Multi-Media-Graphics-Unit, Mikrofon, iDrive, Gesten-Kamera, Lautsprecher, CID Kombi-Instrument, Head-Up-Display, Haptik und dergleichen, da diese dadurch besonders schnell verfügbar sind, nachdem das Kraftfahrzeug in den Normal-Betrieb zurückkehrt.

Der Gegenstand eines nebengeordneten Anspruches betrifft dabei ein Verfahren für ein elektrisches Energiemanagement eines Bordsystems eines Kraftfahrzeuges. Das Verfahren weist dabei ein Überwachen eines Systemzustandes des Kraftfahrzeuges auf. Und falls das Überwachen des Systemzustandes des Kraftfahrzeuges ergibt, dass das Kraftfahrzeug aus einem Normal-Betrieb in einen Stand-By-Betrieb wechselt, weist das Verfahren ferner ein Aktivieren einer Stand-By-Energieversorgung und ein Deaktivieren einer Normal-Energieversorgung auf. Dabei weist die Stand-By-Energieversorgung lediglich eine elektrische Energieversorgung für eine Computervorrichtung einer erfindungsgemäßen Vorrichtung auf, derart, dass ein flüchtiger Computerdatenspeicher der Computervorrichtung, mit einem wahlfreien Zugriff, seine auf ihm gespeichert vorgehaltenen Daten, während des Stand-By-Betriebes weiterhin gespeichert vorhalten kann. Dabei weisen die auf dem flüchtigen Computerdatenspeicher gespeichert vorgehaltenen Daten aktuelle Betriebsdaten von Bordsystemkomponenten des Bordsystems des Kraftfahrzeuges auf. Und dabei weist die Normal-Energieversorgung ein Versorgen von Bordsystemkomponenten des Bordsystems des Kraftfahrzeuges mit elektrischer Energie auf. Ferner erfolgt das Deaktivieren der Normal-Energieversorgung derart, dass die Bordsystemkomponenten des Bordsystems des Kraftfahrzeuges nicht mehr elektrisch bestromt werden.

Verfahrensschritte können dabei automatisiert mittels einer geeigneten Automatisierungsvorrichtung ausgeführt werden.

Es sind erfindungsgemäß nur diejenigen Komponenten des Kraftfahrzeuges als Bordsystemkomponenten des Bordsystems des Kraftfahrzeuges zu verstehen, die keine speziellen Funktionen im Stand-By-Betrieb aufweisen und somit gewöhnlich im abgestellten Fahrzeugzustand auch nicht elektrisch bestromt werden müssen. Eine Diebstahlwarnanlage ist solch eine spezielle Komponente. Sie wird in der Regel im Stand-By-Betrieb über eine Sleep-Mode Power-Line mit der weiterhin benötigten elektrischen Energie versorgt.

Durch die erfindungsgemäße Lehre wird der Vorteil erreicht, dass zumindest Teile des Bordsystems bei einem Aktivieren des Kraftfahrzeuges, nach einem Abstellen des Kraftfahrzeuges, besonders schnell wieder in dem Zustand verfügbar sind, in dem sie sich vor dem Abstellen des Kraftfahrzeuges befanden.

Der Gegenstand eines weiteren nebengeordneten Anspruches betrifft dabei ein Kraftfahrzeug. Das Kraftfahrzeug weist auf: Eine elektrische Energieversorgung, eine erfindungsgemäße Vorrichtung und ein Bordsystem, aufweisend mindestens eine Bordsystemkomponente. Dabei ist die elektrische Energieversorgung dazu eingerichtet, die Vorrichtung mit einer ersten elektrischen Energie für einen Normal-Betrieb und mit einer zweiten elektrischen Energie für einen Stand-By-Betrieb zu versorgen. Ferner ist die Vorrichtung dazu eingerichtet, in dem Stand-By-Betrieb lediglich einen Teil der Vorrichtung mit elektrischer Energie zu versorgen und in dem Normal-Betrieb die Vorrichtung vollständig und die mindestens eine Bordsystemkomponente des Bordsystems mit elektrischer Energie zu versorgen. Und dabei ist das Kraftfahrzeug dazu eingerichtet, ein erfindungsgemäßes Verfahren auszuführen.

Die elektrische Energieversorgung kann beispielsweise eine Batterie sein. Ebenso ist es jedoch möglich, eine aktive elektrische Energiequelle, wie beispielsweise einen elektrischen Generator, für den Normal-Betrieb vorzusehen und eine passive Energiequelle, beispielsweise eine Batterie, für den Stand-By-Betrieb vorzusehen.

Durch die erfindungsgemäße Lehre wird der Vorteil erreicht, dass zumindest Teile des Bordsystems bei einem Aktivieren des Kraftfahrzeuges, nach einem Abstellen des Kraftfahrzeuges, besonders schnell wieder in dem Zustand verfügbar sind, in dem sie sich vor dem Abstellen des Kraftfahrzeuges befanden.

Der Gegenstand eines weiteren nebengeordneten Anspruches betrifft dabei ein Computerprogrammprodukt für eine Vorrichtung und/oder ein Kraftfahrzeug, welches nach einem erfindungsgemäßen Verfahren betreibbar ist.

Durch die erfindungsgemäße Lehre wird der Vorteil erreicht, dass das Verfahren besonders effizient automatisiert ausgeführt werden kann.

Der Gegenstand eines weiteren nebengeordneten Anspruches betrifft dabei einen Datenträger aufweisend irgendein erfindungsgemäßes Computerprogrammprodukt.

Durch die erfindungsgemäße Lehre wird der Vorteil erreicht, dass das Verfahren besonders effizient auf die das Verfahren ausführenden Vorrichtungen, Systeme und/oder Kraftfahrzeuge verteilt beziehungsweise vorgehalten werden kann.

Bevor nachfolgend Ausgestaltungen der Erfindung eingehender beschrieben werden, ist zunächst festzuhalten, dass die Erfindung nicht auf die beschriebenen Komponenten oder die beschriebenen Verfahrensschritte beschränkt ist. Weiterhin stellt auch die verwendete Terminologie keine Einschränkung dar, sondern hat lediglich beispielhaften Charakter. Soweit in der Beschreibung und den Ansprüchen der Singular verwendet wird ist dabei jeweils der Plural mit umfasst, soweit der Kontext dies nicht explizit ausschließt. Etwaige Verfahrensschritte können, soweit der Kontext dies nicht explizit ausschließt, automatisiert ausgeführt werden. Entsprechende Verfahrensabschnitte können zu entsprechenden Vorrichtungseigenschaften führen und umgekehrt, so dass, sofern der Kontext dies nicht explizit ausschließt, ein Wechsel eines Verfahrensmerkmales in ein Vorrichtungsmerkmal ermöglicht wird und umgekehrt.

Nachfolgend werden weitere exemplarische Ausgestaltungen des erfindungsgemäßen Verfahrens erläutert.

Entsprechend einer ersten exemplarischen Ausgestaltung weist das Netzteil einen ersten Eingang für eine erste elektrische Energieversorgung des Netzteiles für den Normal-Betrieb und einen zweiten Eingang für eine zweite elektrische Energieversorgung des Netzteiles für den Stand-By-Betrieb auf.

Diese Ausgestaltung weist den Vorteil auf, dass das Netzteil ausgelegt werden kann, für jeden der beiden Betriebe mit unterschiedlichen Eingangsleistungen versorgt werden zu können. Dadurch können beispielsweise elektrische Energieverluste im Stand-By-Betrieb verringert werden.

Entsprechend einer weiteren exemplarischen Ausgestaltung weist die Vorrichtung auf, dass sich eine Strombelastbarkeit des ersten Einganges des Netzteiles substantiell von einer Strombelastbarkeit des zweiten Einganges des Netzteiles unterscheidet.

Die Strombelastbarkeit des zweiten Einganges kann dabei wesentlich geringer sein, als die des ersten Einganges des Netzteiles. Der zweite Eingang des Netzteiles dient dabei der Energieversorgung von Teilen der erfindungsgemäßen Vorrichtung im Stand-By-Betrieb. In diesem Zustand wird dementsprechend eine geringere Energiemenge für die Energieversorgung benötigt. Da die Spannungsebenen vorgegeben sind, wirkt sich eine geringere Strombelastbarkeit am zweiten Eingang des Netzteiles dahingehend aus, dass das Netzteil am Ausgang, also über die bereitgestellten Spannungsebenen, nur einen Bruchteil der elektrischen Energie des Normal-Betriebes bereitstellen kann.

Beispielsweise kann es dadurch ermöglicht werden, für den Normal-Betrieb eine erste elektrische Energieversorgung vorzusehen, wie beispielsweise eine aktive elektrische Energiequelle, zum Beispiel einen elektrischen Generator, und für den Stand-By-Betrieb beispielsweise eine passive elektrische Energiequelle vorzusehen, zum Beispiel eine elektrische Batterie.

Diese Ausgestaltung weist den Vorteil auf, dass elektrische Energieverluste im Stand-By-Betrieb noch weiter verringert werden können.

Entsprechend einer weiteren exemplarischen Ausgestaltung weist die Vorrichtung ferner auf, dass der erste Eingang des Netzteiles eine maximale Stromaufnahme zwischen 1A und 20A aufweist, und der zweite Eingang des Netzteiles eine maximale Stromaufnahme zwischen 1mA und 30mA aufweist. Vorzugsweise weist der zweite Eingang eine maximale Stromaufnahme zwischen 1mA und 10mA auf.

Da im Stand-By-Betrieb lediglich Teile der erfindungsgemäßen Vorrichtung von dem Netzteil elektrisch versorgt werden müssen und das Bordsystem nicht von dem Netzteil elektrisch versorgt werden muss, muss das Netzteil nur einen Bruchteil der elektrischen Energie des Normal-Betriebes zur Verfügung stellen.

Durch die geringe Stromaufnahme und damit geringe Leistungsaufnahme kann es ermöglicht werden, eine dezidierte elektrische Batterie vorzuhalten, welche die erfindungsgemäße Vorrichtung im Stand-By-Betrieb mit der ihr verfügbaren elektrischen Energie versorgt. Ist die elektrische Energie der dezidierten elektrischen Batterie aufgebraucht, bleibt ein Start des Kraftfahrzeuges dennoch weiterhin normal möglich.

Diese Ausgestaltung weist den Vorteil auf, dass das Netzteil für den Stand-By-Betrieb auf eine Ausgangsleistung gedrosselt werden kann, die auf die mit elektrischer Energie zu versorgenden Teile der erfindungsgemäßen Vorrichtung optimiert werden kann.

Vorteilhaft ist, dass diese Leistungsoptimierung bereits am Eingang des Netzteiles stattfindet. Dadurch können elektrische Energieverluste im Netzteil für den Stand-By-Betrieb weiter verringert werden, wodurch der Stand-By-Betrieb länger aufrechterhalten werden kann, bei gleicher bereitgestellter Gesamtenergie.

Entsprechend einer weiteren exemplarischen Ausgestaltung weist die Vorrichtung ferner auf, dass im Stand-By-Betrieb eine elektrische Leistungsaufnahme der Vorrichtung weniger als 1W beträgt. Vorzugsweise beträgt die elektrische Leistungsaufnahme der Vorrichtung im Stand-By-Betrieb weniger als 100mW. Besonders bevorzugt beträgt die elektrische Leistungsaufnahme der Vorrichtung im Stand-By-Betrieb weniger als 20mW.

Diese Ausgestaltung weist den Vorteil auf, dass der Stand-By-Betrieb noch länger aufrechterhalten werden kann, bei gleicher bereitgestellter Gesamtenergie.

Ferner weist diese Ausgestaltung den Vorteil auf, dass die erfindungsgemäße Vorrichtung im Stand-By-Betrieb über eine im Kraftfahrzeug bereits vorhandene elektrische Klemme beziehungsweise Leitung, wie sie beispielsweise für eine Diebstahlwarnanlage und ähnliche im Stand-By-Betrieb aktive Komponenten bereits genutzt werden, mit der benötigten elektrischen Energie versorgt werden kann. Diese Sleep-Mode Power-Line hat in der Regel eine maximale Strombelastbarkeit von etwa 20mA.

Entsprechend einer weiteren exemplarischen Ausgestaltung weist die Vorrichtung ferner auf, dass ein jeweils notwendiger Stromverbrauch des flüchtigen Computerdatenspeichers, um seine auf ihm gespeicherten Bordsystemzustandsdaten weiterhin vorhalten zu können, von einem jeweiligen Refresh-Takt des flüchtigen Computerdatenspeichers abhängig ist.

Dabei kann eine Abhängigkeit des Stromverbrauches des flüchtigen Computerdatenspeichers von dessen Umgebungstemperatur in der Vorrichtung hinterlegt sein. Vorzugsweise kann die Abhängigkeit des Stromverbrauches des flüchtigen Computerdatenspeichers von dessen Umgebungstemperatur in der Zustandsüberwachungsvorrichtung hinterlegt sein.

In letzterem Fall kann beispielsweise, falls eine dezidierte elektrische Batterie vorgesehen ist, um die elektrische Energie für den Stand-By-Betrieb bereitzustellen, je nach gewöhnlicher Umgebungstemperatur des Auslieferungslandes des Kraftfahrzeuges eine unterschiedlich große Energiekapazität der dezidierten elektrischen Batterie vorgesehen werden.

Diese Ausgestaltung weist den Vorteil auf, dass der Stand-By-Betrieb je nach Temperatur im Kraftfahrzeug länger aufrecht erhalten werden kann, bei gleicher bereitgestellter Gesamtenergie.

Entsprechend einer weiteren exemplarischen Ausgestaltung weist die Vorrichtung ferner auf, dass der flüchtige Computerdatenspeicher dazu eingerichtet ist, seine Refresh-Takte selbständig zu steuern.

Da der Stromverbrauch des flüchtigen Computerdatenspeichers in der Regel von dessen Temperatur abhängig ist, ergibt sich, dass der Refresh-Takt ebenfalls von der Temperatur abhängig ist.

Im Automotive-Bereich werden Komponenten eingesetzt, deren Grundanforderungen oftmals im Temperaturbereich von -40°C bis +90°C liegen. Nicht selten werden für Halbleiterbauelemente für deren Dauerbetriebstemperaturbereiche -40°C bis +125°C gefordert.

In der Regel steigt der Stromverbrauch von flüchtigen Computerdatenspeichern oberhalb von Temperaturen ab ca. +70°C stark an, so dass der Refresh-Takt sich dementsprechend beschleunigt und unterhalb von +10°C der Stromverbrauch der flüchtigen Computerdatenspeicher sich stark verringert, wodurch der Refresh-Takt entsprechend verlangsamt wird.

Damit der flüchtige Computerdatenspeicher seine Refresh-Takte selbst steuern kann, kann dieser einen eigenen Temperatursensor aufweisen.

Um das Energiebudget von der Zustandsüberwachungsvorrichtung besser überwachen zu können, kann eine temperaturabhängige Refresh-Takt-Tabelle des flüchtigen Computerdatenspeichers in der Zustandsüberwachungsvorrichtung hinterlegt sein.

Diese Ausgestaltung weist den Vorteil auf, dass ein von außen vorzugebender Refresh-Takt vermieden werden kann, wodurch die erfindungsgemäße Vorrichtung kostengünstiger produziert werden kann, da elektrische Bauteile eingespart werden können.

Ein weiterer Vorteil ist der, dass es vermieden werden kann, dass ein fehlerhafter Refresh-Takt übermittelt wird. Damit kann vermieden werden, dass die Konsistenz der vorgehaltenen Daten in dem Computerdatenspeicher, durch einen fehlerhaften Refresh-Takt gefährdet wird.

Entsprechend einer weiteren exemplarischen Ausgestaltung weist die Vorrichtung ferner eine Haltevorrichtung auf, die dazu eingerichtet ist, bei einem Wechsel der Energieversorgung des Netzteiles von einem der beiden Eingänge des Netzteiles auf den anderen der beiden Eingänge des Netzteiles, eine Stromversorgung des flüchtigen Computerdatenspeichers ohne Unterbrechung zu gewährleisten.

Diese Ausgestaltung weist den Vorteil auf, dass sichergestellt werden kann, dass ein Umschalten der externen Energieversorgung für das Netzteil sicher ohne Datenverluste im flüchtigen Computerdatenspeicher vorgenommen werden kann.

Entsprechend einer ersten exemplarischen Ausgestaltung weist das Verfahren, falls das Überwachen des Systemzustandes des Kraftfahrzeuges ergibt, dass das Kraftfahrzeug aus dem Stand-By-Betrieb in den Normal-Betrieb wechselt, ferner auf: Aktivieren der Normal-Energieversorgung, deaktivieren der Stand-By-Energieversorgung und aktivieren der entsprechenden Bordsystemkomponenten des Bordnetzes des Kraftfahrzeuges. Dies erfolgt derart, dass diese entsprechenden Bordsystemkomponenten unmittelbar nach dem Wechsel des Kraftfahrzeuges in den Normal-Betrieb für eine Nutzung bereitstehen, die einem Zustand der entsprechenden Bordsystemkomponenten entspricht, den diese aufwiesen, bevor das Kraftfahrzeug zuvor von dem Normal-Zustand in den Stand-By-Zustand wechselte, basierend auf den auf dem flüchtigen Computerdatenspeicher vorgehaltenen Daten.

Diese Ausgestaltung weist den Vorteil auf, dass derjenige Zustand sicher wieder herbeigeführt werden kann, in dem zumindest Teile des Bordsystems sich befanden, bevor von dem Normal-Betrieb in den Stand-By-Betrieb geschaltet wurde.

Ein weiterer Vorteil ist der, dass dieser Zustand äußerst schnell sicher wieder herbeiführbar ist.

Entsprechend einer weiteren exemplarischen Ausgestaltung weist das Verfahren ferner auf, dass der Stand-By-Betrieb indikativ ist, für einen abgeschalteten Zustand des Kraftfahrzeuges.

Diese Ausgestaltung weist den Vorteil auf, dass die entsprechenden Bordsystemzustandsdaten für eine äußerst schnelle Verfügbarkeit auch bei einem längeren Stand des Kraftfahrzeuges gesichert vorgehalten werden können.

Entsprechend einer weiteren exemplarischen Ausgestaltung weist das Verfahren auf, dass der Stand-By-Betrieb für mindestens 10h elektrisch aufrecht erhalten werden kann. Vorzugsweise kann der Stand-By-Betrieb für mindestens 40h elektrisch aufrecht erhalten werden. Besonders bevorzugt kann der Stand-By-Betrieb für mindestens 80h elektrisch aufrecht erhalten werden.

Diese Ausgestaltung weist den Vorteil auf, dass die entsprechenden Bordsystemzustandsdaten für eine äußerst schnelle Verfügbarkeit auch bei einem Stand des Kraftfahrzeuges gesichert vorgehalten werden können, der etwa einem vollen Arbeitstag des Kraftfahrzeugnutzers entspricht.

Im besonders bevorzugten Fall, weist diese Ausgestaltung den Vorteil auf, dass die entsprechenden Bordsystemzustandsdaten für eine äußerst schnelle Verfügbarkeit auch bei einem Stand des Kraftfahrzeuges gesichert vorgehalten werden können, der etwa einem Wochenende entspricht. Dies kann besonders für Berufstätige vorteilhaft sein, die ihr Kraftfahrzeug nur für Arbeitswege nutzen und somit am Wochenende nicht nutzen.

Entsprechend einer ersten exemplarischen Ausgestaltung weist das Kraftfahrzeug ferner auf, dass in einem abgeschalteten Zustand des Kraftfahrzeuges der Stand-By-Betrieb für mindestens 10h elektrisch aufrecht erhalten werden kann. Vorzugsweise kann der Stand-By-Betrieb für mindestens 40h elektrisch aufrecht erhalten werden. Besonders bevorzugt kann der Stand-By-Betrieb für mindestens 80h elektrisch aufrecht erhalten werden.

Beispielsweise kann eine bestimmte limitierte Energiemenge vom Kraftfahrzeug beziehungsweise von dessen elektrischen Energiespeicher zur Verfügung gestellt werden. Ist diese Energiemenge erschöpft, so kann die Vorrichtung vollständig stromlos geschaltet werden, so dass kein weiterer Energieverbrauch entsteht. Dadurch kann verhindert werden, dass der elektrische Energiespeicher des Kraftfahrzeuges sich erschöpft.

Diese Ausgestaltung weist den Vorteil auf, dass das gesicherte Vorhalten der Informationen in der Art, dass die zugehörigen Teile des Bordsystems des Kraftfahrzeuges besonders schnell, nach einem Aktivieren des Kraftfahrzeuges wieder im vorhergehenden Zustand, zum Zeitpunkt des Abstellen des Kraftfahrzeuges, verfügbar sind, nur von der vom Kraftfahrzeug zur Verfügung gestellten Energie limitiert ist.

Bislang musste nach einem Abstellen beziehungsweise Abschalten des Kraftfahrzeuges, beim erneuten Benutzen des Kraftfahrzeuges ein Kaltstarten der Computervorrichtung und damit des Bordsystems durchgeführt werden. Dabei werden in der Regel ca. 1GB bis 1,5GB ausführbarer Code in den flüchtigen Computerdatenspeicher geladen. Danach kann erst die Software, wie beispielsweise das Betriebssystem einer System-on-a-Chip (SoC) Vorrichtung als Betriebssystemvorrichtung, initialisiert werden. Erst dann können die System-Stati von Bordsystemkomponenten des Bordsystem generiert, bezogen und aufbereitet werden. Dadurch dauert es bis zu ca. 40 Sekunden, bis alle Funktionen des Bordsystems im Kraftfahrzeug verfügbar sind.

Dies kann im Automobilbereich jedoch nicht durch ein Ausweichen auf nichtflüchtige Computerdatenspeicher vermieden werden, um die System-Stati, also die Bordsystemzustandsdaten, auch im abgeschalteten Fahrzeugzustand im schnellen Speicher gespeichert vorhalten zu können. Denn diese nichtflüchtigen Computerdatenspeicher sind im Vergleich zu flüchtigen Computerdatenspeichern zu teuer. Ferner sind in der Regel solch hohe Kapazitäten für den Automotive-Bereich nicht verfügbar, da für den Automotive-Bereich spezielle Eignungen beziehungsweise Zertifizierungen notwendig sind. Diese Eignungen an Temperaturbeständigkeit und Qualitätsanforderungen sind bei schnellen nichtflüchtigen Computerdatenspeichern, in der Regel basierend auf NAND-Technologie, auch "Flash-Speicher" genannt, nicht verfügbar und/oder zu teuer.

Ein Vorhalten in flüchtigen Computerdatenspeichern war bislang ebenfalls nicht möglich, da diese im abgeschalteten Kraftfahrzeug nicht bestromt gehalten werden konnten. Bei bisher gängigen Computerdatenspeichern für den Automobilbereich wurde das Memory-Controlling des flüchtigen Computerdatenspeichers von einer angebundenen CPU durchgeführt. Somit müsste die gesamte Computervorrichtung im abgeschalteten beziehungsweise abgestellten Kraftfahrzeugmodus weiterhin mit elektrischer Energie versorgt werden, wodurch der Energieverbrauch zu hoch wäre, um vernünftige Standzeiten des Kraftfahrzeuges ermöglichen zu können, nach denen ein Schnellstart der Bordsysteme noch möglich wäre.

Die Erfindung erlaubt es, Bordsystemzustandsdaten auch nach einem Abstellen des Kraftfahrzeuges in einem flüchtigen Computerdatenspeicher vorzuhalten, diesen im abgestellten Zustand des Kraftfahrzeuges weiterhin bestromt zu halten und somit diese Bordsystemzustandsdaten bei einem erneuten Benutzen der Kraftfahrzeuges äußerst schnell wieder den entsprechenden Bordsystemkomponenten zur Verfügung zu stellen, damit diese wieder den letzten Systemzustand einnehmen können und nicht erneut gestartet werden müssen. Dadurch kann die Zeit vom erneuten Nutzungsbeginn des Kraftfahrzeuges bis zur Verfügbarkeit der letzten Bordsystemzustände von etwa bis zu 40 Sekunden auf etwa 2 bis 3 Sekunden verkürzt werden. Dabei beträgt die im Abstellzustand des Kraftfahrzeuges benötigte Energie nur einen Bruchteil der im Fahrzeugbetrieb benötigten Energie.

Dadurch sind diese Bordsystemzustandsdaten im flüchtigen Computerdatenspeicher in einem abgestellten Kraftfahrzeugzustand signifikant lange gespeichert vorhaltbar. Der flüchtige Computerdatenspeicher kann vom Energiebordnetz des Kraftfahrzeuges ca. 400mAh lang aufrechterhalten werden, was einer Abstelldauer des Kraftfahrzeuges von bis zu 80h entsprechen kann.

Da es im Kraftfahrzeug im abgestellten Zustand bereits einen Sleep-Mode gibt, für existierende Vorrichtungen/Systeme, die weiterhin mit geringem Energieaufwand (maximal ca. 20mA Strombelastbarkeit) verfügbar bestromt gehalten werden sollen, wie beispielsweise eine Diebstahlwarnanlage, kann die erfindungsgemäße Vorrichtung im Stand-By-Betrieb gemäß einer Ausgestaltung der Erfindung ebenfalls von dieser Sleep-Mode-Klemme beziehungsweise Power-Line bestromt gehalten werden, wodurch Produktionskosten des Kraftfahrzeuges verringert werden können. Dazu ist jedoch ein Umschalten von einer Normal-Energieversorgungsklemme des Bordnetzes auf die Stand-By- Energieversorgungsklemme für die erfindungsgemäße Vorrichtung beziehungsweise für den flüchtigen Computerdatenspeicher erforderlich. Dies kann beispielsweise im Netzteil der erfindungsgemäßen Vorrichtung erfolgen.

Um dabei eine kurze Energiezufuhrunterbrechung an den flüchtigen Computerdatenspeicher zu vermeiden, kann eine Halteschaltung vorgesehen werden, welche im Umschaltmoment und bis Einschwingvorgänge abgeschlossen sind, den flüchtigen Computerdatenspeicher weiterhin mit der benötigten elektrischen Energie versorgt.

Die Verteilervorrichtung hält in der Regel mehrere Spannungsebenen vor, beispielsweise 1V, 3V, 7V und dergleichen, wie sie von Bordsystemkomponenten benötigt werden. Die erfindungsgemäße Vorrichtung kann diese Spannungsebenen ebenfalls nutzen. Falls eine für den flüchtigen Computerdatenspeicher elektrische Spannung beziehungsweise elektrische Spannungsebene nicht von der Verteilervorrichtung bereitgestellt wird, kann beispielsweise die Computervorrichtung eine verfügbare Spannungsebene auf die von dem flüchtigen Computerdatenspeicher benötigte Spannungsebene umwandeln.

Ferner können persistente Daten der Bordsystemkomponenten im Stand-By-Betrieb weggeschrieben werden, um diese zu schützen, so wie es bei einem Runterfahren des Bordsystems derzeit ebenfalls erfolgt.

In dem Fall, dass eine temperaturabhängige Refresh-Takt-Tabelle des flüchtigen Computerdatenspeichers in der Zustandsüberwachungsvorrichtung hinterlegt ist, kann zusätzlich zum flüchtigen Computerdatenspeicher noch die Zustandsüberwachungsvorrichtung im Stand-By-Modus derart bestromt gehalten werden, dass diese dem flüchtigen Computerdatenspeicher benötigte Daten aus der Refresh-Takt-Tabelle zur Verfügung stellen kann. Dies kann derart erfolgen, dass dadurch der elektrische Energieverbrauch im Stand-By-Betrieb jedoch nicht signifikant erhöht wird.

Die erfindungsgemäße Vorrichtung kann als eigenständiger Teil am oder im Bordsystem angebunden beziehungsweise integriert sein. Auch kann die erfindungsgemäße Vorrichtung Teil der HeadUnit sein.

Da im Stand-By-Betrieb beziehungsweise Sleep-Mode nur diejenigen Bordsystemkomponenten bestromt gehalten werden, die eine Funktion haben und die HeadUnit selbst im Stand-By-Betrieb keine Funktion aufweist, müsste auch hier nur die erfindungsgemäße Vorrichtung beziehungsweise dessen flüchtiger Computerdatenspeicher und eventuell Teile der Zustandsüberwachungsvorrichtung bestromt gehalten werden.

Durch die Erfindung kann die Batteriekapazität des Kraftfahrzeuges optimal genutzt werden und somit CO2 eingespart werden, da die hierzu genutzte Fahrzeugbatterie somit weniger von einem Verbrennungsmotor oder mittels konventionell generierter elektrischer Energie aufgeladen werden muss. Ferner kann dadurch auch eine geringere Batteriekapazität vorgesehen werden, wodurch Produktionskosten und bei der Batterieproduktion emittiertes CO2 eingespart werden kann.

Die Erfindung wird nachfolgend eingehender an Hand der Figuren erläutert werden. In diesen zeigen:
Fig. 1 eine schematische Darstellung einer vorgeschlagenen Vorrichtung gemäß einer beispielhaften Ausgestaltung der Erfindung;
Fig. 2 eine schematische Darstellung einer vorgeschlagenen Vorrichtung gemäß einer weiteren beispielhaften Ausgestaltung der Erfindung;
Fig. 3 eine schematische Darstellung einer vorgeschlagenen Vorrichtung gemäß einer weiteren beispielhaften Ausgestaltung der Erfindung;
Fig. 4 eine schematische Darstellung eines vorgeschlagenen Verfahrens gemäß einer weiteren beispielhaften Ausgestaltung der Erfindung;
Fig. 5 eine schematische Darstellung eines vorgeschlagenen Verfahrens gemäß einer weiteren beispielhaften Ausgestaltung der Erfindung; und
Fig. 6 eine schematische Darstellung eines vorgeschlagenen Kraftfahrzeuges gemäß einer weiteren beispielhaften Ausgestaltung der Erfindung.

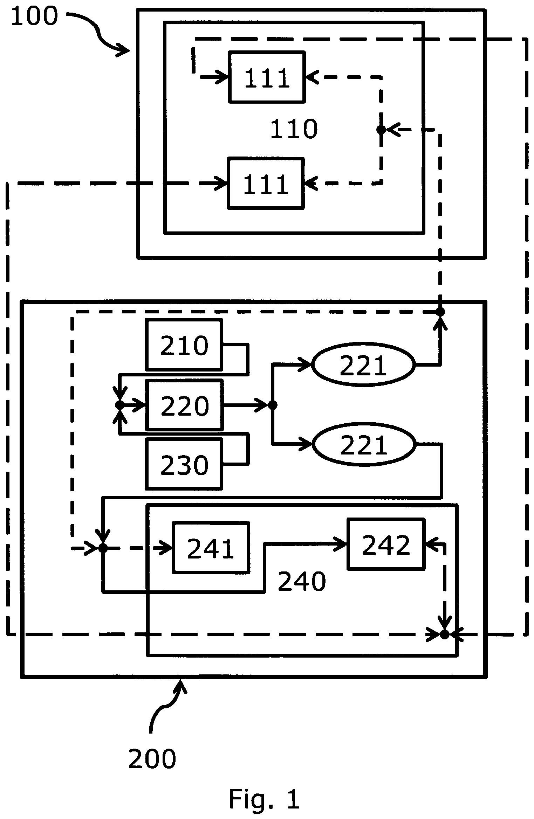

Fig. 1 zeigt eine schematische Darstellung einer vorgeschlagenen Vorrichtung gemäß einer beispielhaften Ausgestaltung der Erfindung.

Dabei zeigt Fig. 1 eine schematische Darstellung einer Vorrichtung 200 für ein elektrisches Energiemanagement eines Bordsystems 110 eines Kraftfahrzeuges 100. Die Vorrichtung 200 weist dabei ein Netzteil 210 zur Energieversorgung des Bordsystems 110 des Kraftfahrzeuges 100 auf. Dabei weist das Netzteil 210 einen Normal-Betrieb und einen Stand-By-Betrieb auf. Ferner weist die Vorrichtung 200 eine Verteilervorrichtung 220 auf, welche ausgangsseitig elektrische Spannungsebenen 221 für die elektrische Energieversorgung von Bordsystemkomponenten 111 des Bordsystems 110 des Kraftfahrzeuges 100 aufweist. Dabei ist die Verteilervorrichtung 220 elektrisch mit dem Netzteil 210 verbunden. Ferner weist die Vorrichtung 200 eine Zustandsüberwachungsvorrichtung 230 auf, zur Überwachung der elektrischen Energieversorgung des Netzteiles 210 und zur Ansteuerung der Verteilervorrichtung 220. Und darüber hinaus weist die Vorrichtung 200 ferner eine Computervorrichtung 240 auf. Dabei ist die Computervorrichtung 240 eingangsseitig elektrisch mit der Ausgangsseite der Verteilervorrichtung 220, über mindestens eine elektrische Spannungsebene 221, verbunden. Ferner weist die Computervorrichtung 240 eine Betriebssystemvorrichtung 241 und einen flüchtigen Computerdatenspeicher 242 auf. Und dabei ist der flüchtige Computerdatenspeicher 242 dazu eingerichtet, auch in dem Stand-By-Betrieb der Vorrichtung 200 für das Energiemanagement bestromt gehalten zu werden, derart, dass er seine auf ihm gespeicherten Daten nicht verliert. Die Ansteuerung der Verteilervorrichtung 220 erfolgt von der Zustandsüberwachungsvorrichtung 230 in dem Normal-Betrieb derart, dass Spannungsebenen 221 für die Computervorrichtung 240 und für Bordkomponenten 111 des Bordsystems 110 des Kraftfahrzeuges 100 bereitgestellt werden. Und ferner erfolgt die Ansteuerung der Verteilervorrichtung 220 von der Zustandsüberwachungsvorrichtung 230 in dem Stand-By-Betrieb derart, dass lediglich eine Spannungsebene 221 für den flüchtigen Computerdatenspeicher 242 der Computervorrichtung 240 bereitgestellt wird.

Der Austausch von Daten zwischen den Bordsystemkomponenten 111 und dem flüchtigen Computerdatenspeicher 242 sind doppelpfeilig dargestellt, um zu verdeutlichen, dass sowohl Daten von den Bordsystemkomponenten 111 an den flüchtigen Computerdatenspeicher 242 übermittelt werden können als auch umgekehrt.

Eine gestrichelte Pfeildarstellung stellt dabei die Datenkommunikation und die Bestromung im Normal-Betrieb dar, wohingegen eine durchgängige Pfeildarstellung die Bestromung im Stand-By-Betrieb darstellt, bei der keine Datenkommunikation zwischen Bordsystemkomponenten 111 und flüchtigem Computerdatenspeicher 242 stattfinden kann. Dabei kann die elektrische Energieversorgung des flüchtigen Computerdatenspeichers 242 der Computervorrichtung 240, die im Stand-By-Betrieb über die untere der beiden in Fig. 1 dargestellten Spannungsebene 221 erfolgt, auch im Normal-Betrieb weiterhin aktiv sein, so dass im Normal-Betrieb die Computervorrichtung über mehrere Spannungsebenen 221 mit elektrischer Energie versorgt werden kann. In dem Stand-By-Betrieb bleibt der flüchtige Computerdatenspeicher 242 jedoch bestromt und kann seine in ihm abgelegten Bordsystemdaten daher gespeichert vorhalten.

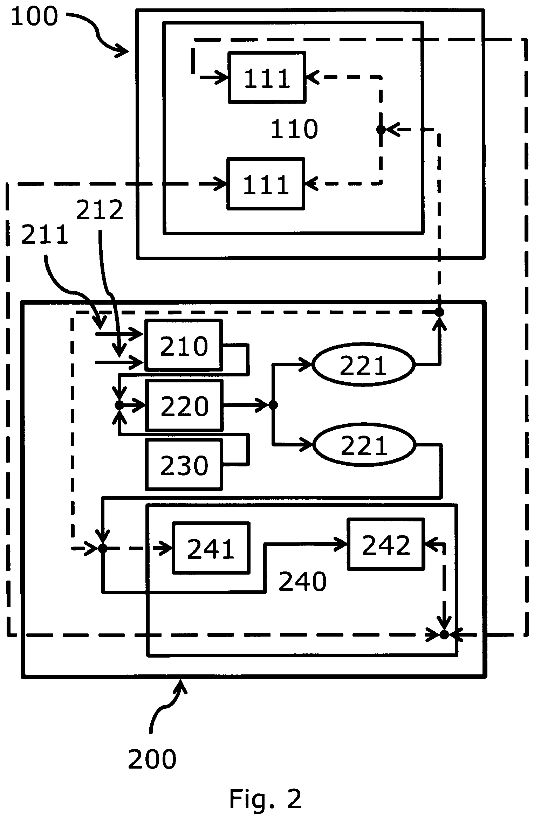

Fig. 2 zeigt eine schematische Darstellung einer vorgeschlagenen Vorrichtung gemäß einer weiteren beispielhaften Ausgestaltung der Erfindung.

Dabei zeigt Fig. 2 eine schematische Darstellung einer bezüglich der Fig. 1 weiterentwickelten Vorrichtung. Das zuvor für Fig. 1 Gesagte, gilt daher auch für Fig. 2 fort.

Fig. 2 zeigt die Vorrichtung aus Fig. 1 bei der ferner das Netzteil 210 einen ersten Eingang 211 für eine erste elektrische Energieversorgung des Netzteiles 210 für den Normal-Betrieb und einen zweiten Eingang 212 für eine zweite elektrische Energieversorgung des Netzteiles 210 für den Stand-By-Betrieb aufweist.

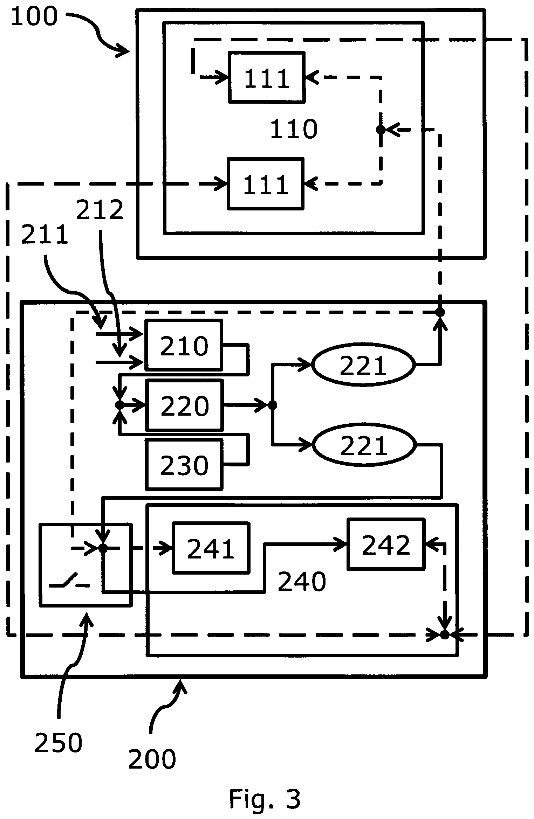

Fig. 3 zeigt eine schematische Darstellung einer vorgeschlagenen Vorrichtung gemäß einer weiteren beispielhaften Ausgestaltung der Erfindung.

Dabei zeigt Fig. 3 eine schematische Darstellung einer bezüglich der Fig. 1 und Fig. 2 weiterentwickelten Vorrichtung. Das zuvor für Fig. 1 und Fig. 2 Gesagte, gilt daher auch für Fig. 3 fort.

Fig. 3 zeigt die Vorrichtung aus Fig. 2 bei der ferner die Vorrichtung eine Haltevorrichtung 250 aufweist. Diese ist dazu eingerichtet, bei einem Wechsel der Energieversorgung des Netzteiles 210 von einem der beiden Eingänge 211, 212 des Netzteiles 210 auf den anderen Eingang 212, 211 des Netzteiles 210, eine Stromversorgung des flüchtigen Computerdatenspeichers 242 ohne Unterbrechung zu gewährleisten.

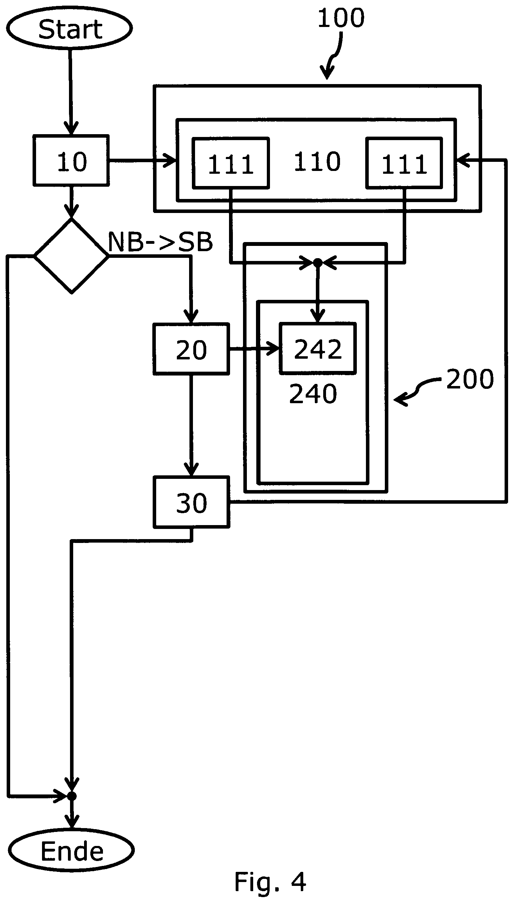

Fig. 4 zeigt eine schematische Darstellung eines vorgeschlagenen Verfahrens gemäß einer weiteren beispielhaften Ausgestaltung der Erfindung.

Fig. 4 zeigt ein Verfahren, bei dem das Verfahren für ein elektrisches Energiemanagement eines Bordsystems 110 eines Kraftfahrzeuges 100 aufweist: Überwachen 10 eines Systemzustandes des Kraftfahrzeuges 100, und falls das Überwachen 10 des Systemzustandes des Kraftfahrzeuges 100 ergibt, dass das Kraftfahrzeug 100 aus einem Normal-Betrieb in einen Stand-By-Betrieb NB->SB wechselt, weist das Verfahren ferner auf: Aktivieren 20 einer Stand-By-Energieversorgung und Deaktivieren 30 einer Normal-Energieversorgung. Dabei weist die Stand-By-Energieversorgung lediglich eine elektrische Energieversorgung für eine Computervorrichtung 240 einer erfindungsgemäßen Vorrichtung 200 auf, derart, dass ein flüchtiger Computerdatenspeicher 242 der Computervorrichtung 240, mit einem wahlfreien Zugriff, seine auf ihm gespeichert vorgehaltenen Daten, während des Stand-By-Betriebes weiterhin gespeichert vorhalten kann. Und dabei weisen die auf dem flüchtigen Computerdatenspeicher 242 gespeichert vorgehaltenen Daten, aktuelle Betriebsdaten von Bordsystemkomponenten 111 des Bordsystems 110 des Kraftfahrzeuges 100 auf. Ferner weist die Normal-Energieversorgung ein Versorgen von Bordsystemkomponenten 111 des Bordsystems 110 des Kraftfahrzeuges 100 mit elektrischer Energie auf. Und dabei erfolgt das Deaktivieren 30 der Normal-Energieversorgung derart, dass die Bordsystemkomponenten 111 des Bordsystems 110 des Kraftfahrzeuges 100 von der Normal-Energieversorgung nicht mehr elektrisch bestromt werden.

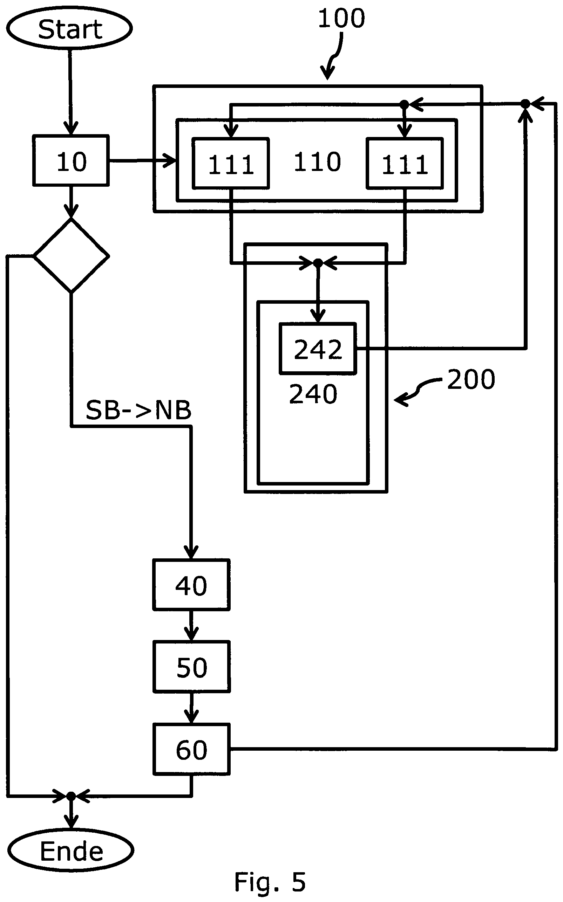

Fig. 5 zeigt eine schematische Darstellung eines vorgeschlagenen Verfahrens gemäß einer weiteren beispielhaften Ausgestaltung der Erfindung.

Dabei zeigt Fig. 5 eine schematische Darstellung eines bezüglich der Fig. 4 weiterentwickelten Verfahrens. Das zuvor für Fig. 4 Gesagte, gilt daher auch für Fig. 5 fort. Aus Gründen der Übersichtlichkeit ist der Verfahrensablauf für den Fall des Wechsels des Kraftfahrzeuges 100 aus dem Normal-Betrieb in den Stand-By-Betrieb NB->SB in Fig. 4 nicht dargestellt.

Fig. 5 zeigt das Verfahren aus Fig. 4 bei dem ferner das Verfahren, falls das Überwachen 10 des Systemzustandes des Kraftfahrzeuges 100 ergibt, dass das Kraftfahrzeug 100 aus dem Stand-By-Betrieb in den Normal-Betrieb wechselt SB->NB, aufweist: Aktivieren 40 der Normal-Energieversorgung, deaktivieren 50 der Stand-By-Energieversorgung und aktivieren 60 der entsprechenden Bordsystemkomponenten 111 des Bordnetzes 110 des Kraftfahrzeuges 100. Letzteres erfolgt derart, dass diese entsprechenden Bordsystemkomponenten 111 unmittelbar nach dem Wechsel des Kraftfahrzeuges 100 in den Normal-Betrieb für eine Nutzung bereitstehen, die einem Zustand der entsprechenden Bordsystemkomponenten 111 entspricht, den diese aufwiesen, bevor das Kraftfahrzeug 100 zuvor von dem Normal-Betrieb in den Stand-By-Betrieb wechselte NB->SB, basierend auf den auf dem flüchtigen Computerdatenspeicher 242 vorgehaltenen Daten.

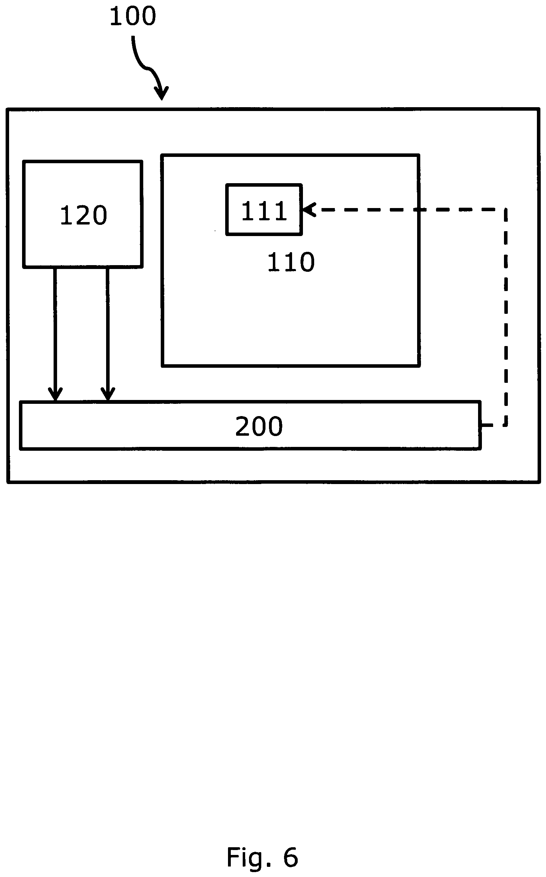

Fig. 6 zeigt eine schematische Darstellung eines vorgeschlagenen Kraftfahrzeuges gemäß einer weiteren beispielhaften Ausgestaltung der Erfindung.

Dabei zeigt Fig. 6 eine schematische Darstellung eines Kraftfahrzeuges 100 aufweisend: Eine elektrische Energieversorgung 120, ein Bordsystem 110, aufweisend mindestens eine Bordsystemkomponente 111 und eine erfindungsgemäße Vorrichtung 200. Dabei ist die elektrische Energieversorgung 120 dazu eingerichtet, die erfindungsgemäße Vorrichtung 200 mit einer ersten elektrischen Energie für einen Normal-Betrieb und mit einer zweiten elektrischen Energie für einen Stand-By-Betrieb zu versorgen. Ferner ist die erfindungsgemäße Vorrichtung 200 dazu eingerichtet, in dem Stand-By-Betrieb lediglich einen Teil der erfindungsgemäße Vorrichtung 200 mit elektrischer Energie zu versorgen und in dem Normal-Betrieb die erfindungsgemäße Vorrichtung 200 vollständig und die mindestens eine Bordsystemkomponente 111 des Bordsystems 110 mit elektrischer Energie zu versorgen. Und dabei sind das Kraftfahrzeug 100 und/oder die erfindungsgemäße Vorrichtung 200 dazu eingerichtet, ein erfindungsgemäßes Verfahren auszuführen.

Die Erfindung kann dabei wie nachfolgend zusammengefasst werden:
Die Erfindung zielt vor allem darauf ab, die Aufstartzeit der Media-Graphics-Unit (MGU) beziehungsweise der HeadUnit deutlich zu verkürzen. Derzeit liegt diese in einem Bereich um 20s bis 40s. Mithilfe einer sogenannten Instant-On Funktionalität kann der Start-Up auf 2 bis 3s reduziert werden.

Im Wesentlichen wird dies durch die neue DRAM-Technologie LP-DDR4 ermöglicht, da dort mit einem sehr geringen Energieaufwand (refresh-current) der Arbeitsspeicher seinen Inhalt behält und dabei die refresh-rate beziehungsweise seinen Refresh-Takt selbst steuert. Dazu war bisher ein externer Controller notwendig.

In der MGU kann dazu eine elektrische Halteschaltung für das LP-DDR4 implementiert werden. Im normalen Betrieb der MGU können sämtliche internen Komponenten wie beispielsweise Hauptprozessor, Ethernet-switch, CAN-receiver, APIX-Transmitter, Laufwerke und dergleichen über eine erste Klemme gespeist werden. Im "Instant-On" - Mode hingegen kann der Haltestrom über eine zweite Klemme gespeist werden, die eine geringe elektrische Leistung als die erste Klemme zur Verfügung stellt. Durch die elektrische Halteschaltung entfällt beim Aufstart das Software-Laden sowie -Initialisieren.

Ab dem sogenannten "Wake-Up Event" kann dann wieder auf die erste Klemme umgeschaltet werden und das System startet an dem Punkt, an dem es sich vor dem "Sleep-Mode" befunden hat.

Um die Startfähigkeit des Kraftfahrzeuges auch bei längerem Parken gewährleisten zu können, schaltet sich der "Instant-On-Mode" nach ca. 80h ab. Beim nächsten Wake-Up führt das Gerät in diesem Fall einen Kaltstart durch, wie dies bislang stets der Fall war.

Der Weckvorgang kann dabei durch eine State-Machine gesteuert werden, die bei jedem Wake-Up entscheidet, in welchem Mode gebootet wird und dementsprechend unterschiedliche Startsequenzen initiieren kann. Dazu müssen im Betriebssystem, im Bord Support Package und in den Applikationen Treiber entsprechend erweitert und angepasst werden.

### Bezugszeichenliste

- 10: Überwachen eines Systemzustandes des Kraftfahrzeuges
- 20: Aktivieren einer Stand-By-Energieversorgung
- 30: Deaktivieren einer Normal-Energieversorgung
- 40: Aktivieren der Normal-Energieversorgung
- 50: Deaktivieren der Stand-By-Energieversorgung
- 60: Aktivieren der entsprechenden Bordsystemkomponenten
- 100: Kraftfahrzeug
- 110: Bordsystem
- 111: Bordkomponente
- 120: Elektrische Energieversorgung
- 200: Vorrichtung für ein elektrisches Energiemanagement eines Bordsystems eines Kraftfahrzeuges
- 210: Netzteil
- 211: Erster Eingang
- 212: Zweiter Eingang
- 220: Verteilervorrichtung
- 221: Elektrische Spannungsebene
- 230: Zustandsüberwachungsvorrichtung
- 240: Computervorrichtung
- 241: Betriebssystemvorrichtung
- 242: Flüchtiger Computerdatenspeicher
- NB->SB: Wechsel vom Normal-Betrieb in den Stand-By-Betrieb
- SB->NB: Wechsel vom Stand-By-Betrieb in den Normal-Betrieb

## Patentansprüche

1. Vorrichtung (200) für ein elektrisches Energiemanagement eines Bordsystems (110) eines Kraftfahrzeuges (100), die Vorrichtung (200) aufweisend:
- Ein Netzteil (210) zur Energieversorgung des Bordsystems (110) des Kraftfahrzeuges (100), wobei das Netzteil (210) einen Normal-Betrieb als einen ersten Betriebszustand und einen Stand-By-Betrieb als einen zweiten Betriebszustand aufweist,
- Eine Verteilervorrichtung (220), ausgangsseitig aufweisend elektrische Spannungsebenen (221) für die elektrische Energieversorgung von Bordsystemkomponenten (111) des Bordsystems (110) des Kraftfahrzeuges (100), wobei die Verteilervorrichtung (220) elektrisch mit dem Netzteil (210) verbunden ist,
- Eine Zustandsüberwachungsvorrichtung (230), zur Überwachung des Betriebszustandes des Netzteiles (210) und zur Ansteuerung der Verteilervorrichtung (220),
- Eine Computervorrichtung (240), wobei die Computervorrichtung (240) eingangsseitig elektrisch mit der Ausgangsseite der Verteilervorrichtung (220), über mindestens eine elektrische Spannungsebene (221), verbunden ist, und
die Computervorrichtung (240) eine Betriebssystemvorrichtung (241) und einen flüchtigen Computerdatenspeicher (242) aufweist, wobei der flüchtige Computerdatenspeicher (242) dazu eingerichtet ist, Bordsystemzustandsdaten von Bordsystemkomponenten (111) des Bordsystems (110) des Kraftfahrzeuges gespeichert vorzuhalten, und wobei
die Ansteuerung der Verteilervorrichtung (220) von der Zustandsüberwachungsvorrichtung (230) in dem Normal-Betrieb derart erfolgt, dass Spannungsebenen (221) für die Computervorrichtung (240) und für Bordsystemkomponenten (111) des Bordsystems (110) des Kraftfahrzeuges (100) bereitgestellt werden, und
die Ansteuerung der Verteilervorrichtung (220) von der Zustandsüberwachungsvorrichtung (230) in dem Stand-By-Betrieb derart erfolgt, dass lediglich eine Spannungsebene (221) für den flüchtigen Computerdatenspeicher (242) der Computervorrichtung (240) bereitgestellt wird, und wobei
der flüchtige Computerdatenspeicher (242) dazu eingerichtet ist, auch in dem Stand-By-Betrieb bestromt gehalten zu werden, derart, dass er seine auf ihm gespeicherten Bordsystemzustandsdaten nicht verliert.

2. Vorrichtung (200) gemäß Anspruch 1, wobei das Netzteil (210) aufweist:
- Einen ersten Eingang (211) für eine erste elektrische Energieversorgung des Netzteiles (210) für den Normal-Betrieb, und
- Einen zweiten Eingang (212) für eine zweite elektrische Energieversorgung des Netzteiles (210) für den Stand-By-Betrieb.

3. Vorrichtung (200) gemäß Anspruch 2, wobei
sich eine Strombelastbarkeit des ersten Einganges (211) des Netzteiles (210) substantiell von einer Strombelastbarkeit des zweiten Einganges (212) des Netzteiles (210) unterscheidet.

4. Vorrichtung (200) gemäß Anspruch 2 oder 3, wobei
der erste Eingang (211) des Netzteiles (210) eine maximale Stromaufnahme zwischen 1A und 20A aufweist, und
der zweite Eingang (212) des Netzteiles (210) eine maximale Stromaufnahme zwischen 1mA und 30mA aufweist, vorzugsweise eine maximale Stromaufnahme zwischen 1mA und 10mA.

5. Vorrichtung (200) gemäß irgendeinem der vorhergehenden Ansprüche, wobei
im Stand-By-Betrieb eine elektrische Leistungsaufnahme der Vorrichtung (200) weniger als 1W beträgt, vorzugsweise weniger als 100mW, besonders bevorzugt weniger als 20mW.

6. Vorrichtung (200) gemäß irgendeinem der vorhergehenden Ansprüche, wobei
ein jeweils notwendiger Stromverbrauch des flüchtigen Computerdatenspeichers (242), um seine auf ihm gespeicherten Bordsystemzustandsdaten weiterhin vorhalten zu können, von einem jeweiligen Refresh-Takt des flüchtigen Computerdatenspeichers (242) abhängig ist.

7. Vorrichtung (200) gemäß irgendeinem der vorhergehenden Ansprüche, wobei
der flüchtige Computerdatenspeicher (242) dazu eingerichtet ist, seine Refresh-Takte selbständig zu steuern.

8. Vorrichtung (200) gemäß irgendeinem der vorhergehenden Ansprüche, die Vorrichtung (200) ferner aufweisend:
- Eine Haltevorrichtung (250), die dazu eingerichtet ist, bei einem Wechsel der elektrischen Energieversorgung des Netzteiles (210) von einem der beiden Eingänge (211, 212) des Netzteiles (210) auf den anderen der beiden Eingänge (212, 211) des Netzteiles (210), eine Stromversorgung des flüchtigen Computerdatenspeichers (242) ohne Energieunterbrechung zu gewährleisten.

9. Verfahren für ein elektrisches Energiemanagement eines Bordsystems (110) eines Kraftfahrzeuges (100), das Verfahren aufweisend:
- Überwachen (10) eines Systemzustandes des Kraftfahrzeuges (100), und
Falls das Überwachen (10) des Systemzustandes des Kraftfahrzeuges (100) ergibt, dass das Kraftfahrzeug (100) aus einem Normal-Betrieb in einen Stand-By-Betrieb wechselt (NB->SB):
- Aktivieren (20) einer Stand-By-Energieversorgung, wobei die Stand-By-Energieversorgung lediglich eine elektrische Energieversorgung für eine Computervorrichtung (240) einer Vorrichtung (200) gemäß irgendeines vorhergehenden Anspruches aufweist, derart, dass ein flüchtiger Computerdatenspeicher (242) der Computervorrichtung (240), mit einem wahlfreien Zugriff, seine auf ihm gespeichert vorgehaltenen Daten, während des Stand-By-Betriebes weiterhin gespeichert vorhalten kann, und wobei
die auf dem flüchtigen Computerdatenspeicher (242) gespeichert vorgehaltenen Daten aktuelle Betriebsdaten von Bordsystemkomponenten (111) des Bordsystems (110) des Kraftfahrzeuges (100) aufweisen, und
- Deaktivieren (30) einer Normal-Energieversorgung, wobei die Normal-Energieversorgung ein Versorgen von Bordsystemkomponenten (111) des Bordsystems (110) des Kraftfahrzeuges (100) mit elektrischer Energie aufweist, wobei das Deaktivieren (30) der Normal-Energieversorgung derart erfolgt, dass die Bordsystemkomponenten (111) des Bordsystems (110) des Kraftfahrzeuges (100) nicht mehr elektrisch bestromt werden.

10. Verfahren gemäß Anspruch 9, das Verfahren ferner, falls das Überwachen (10) des Systemzustandes des Kraftfahrzeuges (100) ergibt, dass das Kraftfahrzeug (100) aus dem Stand-By-Betrieb in den Normal-Betrieb wechselt (SB->NB), aufweisend:
- Aktivieren (40) der Normal-Energieversorgung,
- Deaktivieren (50) der Stand-By-Energieversorgung, und
- Aktivieren (60) der entsprechenden Bordsystemkomponenten (111) des Bordnetzes (110) des Kraftfahrzeuges (100) derart, dass diese entsprechenden Bordsystemkomponenten (111) unmittelbar nach dem Wechsel des Kraftfahrzeuges (100) in den Normal-Betrieb für eine Nutzung bereitstehen, die einem Zustand der entsprechenden Bordsystemkomponenten (111) entspricht, den diese aufwiesen, bevor das Kraftfahrzeug (100) zuvor von dem Normal-Zustand in den Stand-By-Zustand wechselte, basierend auf den auf dem flüchtigen Computerdatenspeicher (242) vorgehaltenen Daten.

11. Verfahren gemäß irgendeinem der vorhergehenden Ansprüche 9 oder 10, wobei
der Stand-By-Betrieb indikativ ist, für einen abgeschalteten Zustand des Kraftfahrzeuges (100).

12. Verfahren gemäß irgendeinem der vorhergehenden Ansprüche 9 bis 11, wobei
der Stand-By-Betrieb für mindestens 10h, vorzugsweise für mindestens 40h, besonders bevorzugt für mindestens 80h, elektrisch aufrecht erhalten werden kann.

13. Kraftfahrzeug (100) aufweisend:
- Eine elektrische Energieversorgung (120),
- Ein Bordsystem (110), aufweisend mindestens eine Bordsystemkomponente (111), und
- Eine Vorrichtung (200) gemäß irgendeinem der vorhergehenden Ansprüche 1 bis 8, wobei
die elektrische Energieversorgung (120) dazu eingerichtet ist, die Vorrichtung (200) mit einer ersten elektrischen Energie für einen Normal-Betrieb und mit einer zweiten elektrischen Energie für einen Stand-By-Betrieb zu versorgen,
die Vorrichtung (200) dazu eingerichtet ist, in dem Stand-By-Betrieb lediglich einen Teil der Vorrichtung (200) mit elektrischer Energie zu versorgen, und
in dem Normal-Betrieb die Vorrichtung (200) vollständig und die mindestens eine Bordsystemkomponente (111) des Bordsystems (110) mit elektrischer Energie zu versorgen, und wobei
das Kraftfahrzeug (100) dazu eingerichtet ist, ein Verfahren gemäß irgendeinem der vorhergehenden Ansprüche 9 bis 12 auszuführen.

14. Kraftfahrzeug (100) gemäß Anspruch 13, wobei in einem abgeschalteten Zustand des Kraftfahrzeuges (100) der Stand-By-Betrieb für mindestens 10h, vorzugsweise für mindestens 40h, besonders bevorzugt für mindestens 80h, elektrisch aufrecht erhalten werden kann.

## Claims

1. An apparatus (200) for electrical energy management of a vehicle system (110) of a motor vehicle (100), the apparatus (200) comprising:
- a power supply unit (210) configured to supply energy to the vehicle system (110) of the motor vehicle (100), wherein the power supply unit (210) has a normal mode as a first operating state and a standby mode as a second operating state,
- a distributor apparatus (220), an output side of which has voltage levels (221) for supplying electrical energy to vehicle system components (111) of the vehicle system (110) of the motor vehicle (100), wherein the distributor apparatus (220) is electrically connected to the power supply unit (210),
- a state monitoring apparatus (230) configured to monitor the operating state of the power supply unit (210) and to actuate the distributor apparatus (220),
- a computer apparatus (240), wherein an input side of the computer apparatus (240) is electrically connected to the output side of the distributor apparatus (220), via at least one voltage level (221), and
the computer apparatus (240) has an operating system apparatus (241) and a volatile computer data memory (242), wherein the volatile computer data memory (242) is configured to keep vehicle system state data from vehicle system components (111) of the vehicle system (110) of the motor vehicle (100) in stored fashion, and wherein
the distributor apparatus (220) is actuated by the state monitoring apparatus (230) in the normal mode such that voltage levels (221) for the computer apparatus (240) and for vehicle system components (111) of the vehicle system (110) of the motor vehicle (100) are provided, the distributor apparatus (220) is actuated by the state monitoring apparatus (230) in the standby mode such that merely a voltage level (221) for the volatile computer data memory (242) of the computer apparatus (240) is provided, and wherein
the volatile computer data memory (242) is configured to be kept supplied with current even in the standby mode such that the volatile computer data memory (242) does not lose the vehicle system state data stored therein.

2. The apparatus (200) according to claim 1, wherein the power supply unit (210) comprises:
- a first input (211) for a first electrical energy supply for the power supply unit (210) for the normal mode, and
- a second input (212) for a second electrical energy supply for the power supply unit (210) for the standby mode.

3. The apparatus (200) according to claim 2, wherein a current-carrying capacity of the first input (211) of the power supply unit (210) is substantially different than a current-carrying capacity of the second input (212) of the power supply unit (210).

4. The apparatus (200) according to claim 2 or 3, wherein the first input (211) of the power supply unit (210) has a maximum current draw of between 1 A and 20 A, and the second input (212) of the power supply unit (210) has a maximum current draw of between 1 mA and 30 mA, preferably a maximum current draw of between 1 mA and 10 mA.

5. The apparatus (200) according to any one of the preceding claims, wherein an electrical power draw of the apparatus in the standby mode is less than 1 W, preferably is less than 100 mW, more preferably less than 20 mW.

6. The apparatus (200) according to any one of the preceding claims, wherein a respective necessary power consumption of the volatile computer data memory (242) in order to be able to continue to keep the vehicle system state data that are stored therein, is dependent on a respective refresh cycle time of the volatile computer data memory (242).

7. The apparatus (200) according to any one of the preceding claims, wherein the volatile computer data memory (242) is configured to control refresh cycle times independently.

8. The apparatus (200) according to any one of the preceding claims, further comprising: a holding apparatus (250) configured so as, in an event of a change of the electrical energy supply of the power supply unit (210) from a first of said two inputs (211, 212) of the power supply unit (210) to the second of the two inputs (212, 211) of the power supply unit (210), to ensure a power supply for the volatile computer data memory (242) without an energy interruption.

9. A method for electrical energy management of a vehicle system (110) of a motor vehicle (100), the method comprising:
- monitoring (10) a system state of the motor vehicle (100), and in a case in which a result of the monitoring (10) of the system state of the motor vehicle (100) is that the motor vehicle (100) changes from a normal mode to a standby mode (NB->SB):
- activating (20) a standby energy supply, wherein the standby energy supply has merely an electrical energy supply for a computer apparatus (240) of an apparatus (200) according to any one of the preceding claims, such that a volatile computer data memory (242) of the computer apparatus (240), with random access, can continue, during the standby mode, to keep in stored fashion data that are stored on the volatile computer data memory (242), and wherein
the data stored on the volatile computer data memory (242) have latest operating data from vehicle system components (111) of the vehicle system (110) of the motor vehicle (100), and
- deactivating (30) a normal energy supply, wherein the normal energy supply involves supplying vehicle system components (111) of the vehicle system (110) of the motor vehicle (100) with electrical energy, wherein the deactivating (30) of the normal energy supply is effected such that the vehicle system components (111) of the vehicle system (110) of the motor vehicle (100) are no longer supplied with electric current.

10. The method according to claim 9, further comprising in a case in which the result of the monitoring (10) of the system state of the motor vehicle (100) is that the motor vehicle (100) changes from the standby mode to the normal mode (SN->NB):
- activating (40) the normal energy supply,
- deactivating (50) the standby energy supply, and
- activating (60) applicable vehicle system components (111) of the vehicle system (110) of the motor vehicle (100) such that the applicable vehicle system components (111) are available, immediately after the change of the motor vehicle (100) to the normal mode, for a use that corresponds to a state of the applicable vehicle system components (111) that the vehicle system components (111) had before the motor vehicle (100) previously changed from the normal state to the standby state, based on the data that are stored on the volatile computer data memory (242).

11. The method according to any of preceding claim 9 or 10, wherein the standby mode is indicative for a switched-off state of the motor vehicle (100).

12. The method according to any of preceding claims 9 to 11, wherein
the standby mode can be electrically maintained for at least 10 hours, preferably for at least 40 hours, more preferably for at least 80 hours.

13. A motor vehicle (100) comprising:
- an electrical energy supply (120),
- a vehicle system (110) having at least one vehicle system component (111), and
- an apparatus (200) according to any one of the preceding claims 1 to 8, wherein the electrical energy supply (120) is configured to supply the apparatus (200) with a first electrical energy for a normal mode and with a second electrical energy for a standby mode,
the apparatus (200) is configured so as, in the standby mode, to supply merely part of the apparatus (200) with electrical energy, and,
in the normal mode, to supply the apparatus (200) completely and the at least one vehicle system component (111) of the vehicle system (110) with electrical energy, and wherein
the motor vehicle (100) is configured to perform a method according to any one of the preceding claims 9 to 12.

14. The motor vehicle (100) according to claim 13, wherein
in a switched-off state of the motor vehicle (100) the standby mode can be electrically maintained for at least 10 hours, preferably for at least 40 hours, more preferably for 80 hours.

## Revendications

1. Dispositif (200) pour la gestion de l'énergie électrique d'un système embarqué (110) d'un véhicule à moteur (100), le dispositif (200) comprenant :
- Alimentation électrique (210) destinée à fournir de l'énergie au système embarqué (110) du véhicule à moteur (100), l'alimentation électrique (210) ayant un fonctionnement normal comme premier état de fonctionnement et un fonctionnement en veille comme second état de fonctionnement,
- un dispositif de distribution (220) ayant des niveaux de tension électrique (221) du côté de la sortie pour alimenter en énergie électrique des composants (111) du système embarqué (110) du véhicule automobile (100), le dispositif de distribution (220) étant relié électriquement à l'unité d'alimentation en énergie (210),
- Un dispositif de surveillance d'état (230), pour surveiller l'état de fonctionnement de l'unité d'alimentation électrique (210) et pour commander le dispositif de distribution (220),
- un dispositif informatique (240), dans lequel
le dispositif informatique (240) est connecté électriquement du côté entrée au côté sortie du dispositif de distribution (220), par l'intermédiaire d'au moins un niveau de tension électrique (221), et
le dispositif informatique (240) a un dispositif de système d'exploitation (241) et une mémoire de données informatiques volatiles (242), la mémoire de données informatiques volatiles (242) étant configurée pour stocker des données d'état de système embarqué de composants de système embarqué (111) du système embarqué (110) du véhicule à moteur, et dans laquelle
le dispositif de distribution (220) est commandé par le dispositif de surveillance d'état (230) dans le mode normal de telle sorte que des niveaux de tension (221) sont fournis pour le dispositif d'ordinateur (240) et pour les composants du système embarqué (111) du système embarqué (110) du véhicule automobile (100), et
la commande du dispositif de distribution (220) par le dispositif de surveillance de l'état (230) en mode d'attente est telle qu'un seul niveau de tension (221) est fourni à la mémoire de données informatiques volatiles (242) du dispositif informatique (240), et dans laquelle
ladite mémoire volatile de données informatiques (242) est adaptée pour être maintenue alimentée même dans ledit mode d'attente, de sorte qu'elle ne perd pas ses données d'état de système embarqué stockées sur celle-ci.

2. Dispositif (200) selon la revendication 1, dans lequel l'alimentation électrique (210) comprend :
- Une première entrée (211) pour une première alimentation électrique de l'alimentation électrique (210) pour un fonctionnement normal, et.
- Une seconde entrée (212) pour une seconde alimentation électrique de l'alimentation électrique (210) pour un fonctionnement en mode veille.

3. Dispositif (200) selon la revendication 2, dans lequel une capacité de transport de courant de la première entrée (211) de l'alimentation électrique (210) est sensiblement différente d'une capacité de transport de courant de la seconde entrée (212) de l'alimentation électrique (210).

4. Dispositif (200) selon la revendication 2 ou 3, dans lequel
la première entrée (211) de l'alimentation électrique (210) a une consommation de courant maximale comprise entre 1A et 20A, et
la deuxième entrée (212) de l'alimentation électrique (210) a une consommation de courant maximale comprise entre 1mA et 30mA, de préférence une consommation de courant maximale comprise entre 1mA et 10mA.

5. Dispositif (200) selon l'une quelconque des revendications précédentes, dans lequel en mode veille, la consommation électrique du dispositif (200) est inférieure à 1W, de préférence inférieure à 100mW, plus préférablement inférieure à 20mW.

6. Dispositif (200) selon l'une quelconque des revendications précédentes, dans lequel une consommation d'énergie nécessaire respective de la mémoire de données informatiques volatile (242) pour pouvoir continuer à maintenir ses données d'état de système embarqué stockées sur celle-ci dépend d'une horloge de rafraîchissement respective de la mémoire de données informatiques volatile (242).

7. Dispositif (200) selon l'une quelconque des revendications précédentes, dans lequel la mémoire volatile de données informatiques (242) est adaptée pour commander de manière autonome ses horloges de rafraîchissement.

8. Dispositif (200) selon l'une quelconque des revendications précédentes, le dispositif (200) comprenant en outre :
- un dispositif de maintien (250) adapté pour fournir de l'énergie à la mémoire volatile de données informatiques (242) sans interruption d'énergie lors d'un changement de l'alimentation électrique de l'alimentation électrique (210) de l'une des deux entrées (211, 212) de l'alimentation électrique (210) à l'autre des deux entrées (212, 211) de l'alimentation électrique (210).

9. Procédé de gestion de l'énergie électrique d'un système embarqué (110) d'un véhicule à moteur (100), le procédé comprenant :
- Surveillance (10) d'un état du système du véhicule à moteur (100), et.
si la surveillance (10) de l'état du système du véhicule à moteur (100) indique que le véhicule à moteur (100) passe d'un mode normal à un mode d'attente (NB->SB) :
- l'activation (20) d'une alimentation électrique de secours, dans laquelle l'alimentation électrique de secours comprend uniquement une alimentation électrique pour un dispositif informatique (240) d'un dispositif (200) selon l'une quelconque des revendications précédentes, de sorte qu'un stockage de données informatiques volatiles (242) du dispositif informatique (240), avec un accès aléatoire, peut continuer à stocker ses données stockées sur celui-ci pendant l'opération de secours, et dans laquelle les données stockées sur le stockage de données informatiques volatiles (242) comprennent des données opérationnelles actuelles des composants du système embarqué (111) du système embarqué (110) du véhicule à moteur (100), et
- la désactivation (30) d'une alimentation normale en énergie, l'alimentation normale en énergie comprenant l'alimentation en énergie électrique de composants de système de bord (111) du système de bord (110) du véhicule automobile (100), la désactivation (30) de l'alimentation normale en énergie ayant lieu de telle sorte que les composants de système de bord (111) du système de bord (110) du véhicule automobile (100) ne sont plus alimentés électriquement.

10. Procédé selon la revendication 9, le procédé comprenant en outre, si la surveillance (10) de l'état du système du véhicule à moteur (100) révèle que le véhicule à moteur (100) passe du mode en veille au mode Normal (SB->NB), les étapes suivantes :
- activation (40) de l'alimentation normale,
- désactivation (50) de l'alimentation de secours, et
- activation (60) des composants de système embarqués correspondants (111) du réseau embarqué (110) du véhicule à moteur (100) de telle sorte que ces composants de système embarqués correspondants (111) soient disponibles pour une utilisation immédiatement après que le véhicule à moteur (100) passe au mode normal correspondant à un état que les composants de système embarqués correspondants (111) avaient avant que le véhicule à moteur (100) ne passe précédemment du mode normal au mode d'attente sur la base des données stockées sur la mémoire de données informatiques volatiles (242).

11. Procédé selon l'une quelconque des revendications précédentes 9 ou 10, dans lequel l'opération de mise en veille est indicative d'un état hors tension du véhicule à moteur (100).

12. Procédé selon l'une quelconque des revendications précédentes 9 à 11, dans lequel le fonctionnement en veille peut être maintenu électriquement pendant au moins 10h, de préférence pendant au moins 40h, plus préférablement pendant au moins 80h.

13. Véhicule à moteur (100) comprenant :
- Une alimentation électrique (120),
- Un système embarqué (110) comprenant au moins un composant de système embarqué (111), et
- Dispositif (200) selon l'une quelconque des revendications précédentes 1 à 8, dans lequel
l'alimentation électrique (120) est adaptée pour alimenter le dispositif (200) avec une première puissance électrique pour un fonctionnement normal et avec une seconde puissance électrique pour un fonctionnement en veille,
en mode veille, le dispositif (200) est agencé pour fournir de l'énergie électrique à une partie seulement du dispositif (200), et
dans le mode normal, fournir de l'énergie électrique au dispositif (200) entièrement et à l'au moins un composant de système embarqué (111) du système embarqué (110), et dans lequel
le véhicule automobile (100) est adapté pour exécuter un procédé selon l'une quelconque des revendications précédentes 9 à 12.

14. Véhicule à moteur (100) selon la revendication 13, dans lequel
dans un état d'arrêt du véhicule automobile (100), le fonctionnement en veille peut être maintenu électriquement pendant au moins 10h, de préférence pendant au moins 40h, plus préférablement pendant au moins 80h.
